# EUROPÄISCHE PATENTSCHRIFT

(11) **EP 0 778 913 B1**
(45) Veröffentlichungstag und Bekanntmachung des Hinweises auf die Patenterteilung: **03.06.1998**
(21) Anmeldenummer: 96911950.2
(22) Anmeldetag: 27.03.1996
(51) Int. Cl.: E05B 17/14

(54) **VERSCHLUSS FÜR EINE TÜR, INSBESONDERE SCHALTSCHRANKTÜR**
CATCH FOR A DOOR, ESPECIALLY A SWITCHBOARD DOOR
SYSTEME DE FERMETURE POUR PORTE, NOTAMMENT POUR PORTE D'ARMOIRE DE DISTRIBUTION

(30) Priorität: 01.04.1995 DE 19512280
(43) Veröffentlichungstag der Anmeldung: 18.06.1997
(73) Patentinhaber: Rittal-Werk Rudolf Loh GmbH & Co. KG, 35745 Herborn (DE)
(72) Erfinder: ELM, Oskar, D-35716 Dietzhölztal (DE); MÜNCH, Udo, D-35764 Sinn (DE); WEBER, Thomas, D-35745 Herborn (DE)
(74) Vertreter: Fleck, Hermann-Josef, Dr.-Ing.
(86) Internationale Anmeldenummer: EP9601342
(87) Internationale Veröffentlichungsnummer: WO9631674

(56) Entgegenhaltungen:
- DE-A- 3 718 740
- DE-A- 4 311 970
- DE-U- 8 605 436
- FR-A- 970 002

## Beschreibung

Die Erfindung betrifft einen Verschluß für eine Tür, insbesondere Schaltschranktür, mit einer mit der Tür verbindbaren und ein Tür-Schloß tragenden Schloßplatte und mit einem an der Schloßplatte verstellbar geführten Schieber-Deckel, der mittels eines Deckel-Schlosses in einer das Tür-Schloß überdeckenden Stellung abschließbar ist.

Ein derartiger Verschluß ist aus der DE 86 05 436 Ul bekannt. Dieser bekannte Verschluß dient dazu, den Zugang zum Tür-Schloß von Zugriffsberechtigungen abhängig zu machen und dieses vor Witterungseinflüssen zu schützen. Dies ist mit der gezeigten Ausgestaltung nicht optimal gelöst, da das Deckelschloß stets freiliegt und auch keine ausreichende Sicherheit gegen unberechtigten Zugriff bietet.

Es ist Aufgabe der Erfindung, einen Verschluß der eingangs erwähnten Art zu schaffen, der die Sicherheit gegen unberechtigten Zugriff wesentlich erhöht und außerdem vor Witterungseinflüssen besser geschützt ist.

Diese Aufgabe wird nach der Erfindung dadurch gelöst, daß das Tür-Schloß als Vorreiberschloß und das Deckel-Schloß als Schließzylinder ausgebildet sind, daß mit der Schloßplatte ein Teil-Deckel verbunden ist, der sich mit dem in Schließstellung befindlichen Schieber-Deckel an der Stoßstelle überlappt und eine geschlossene abgedichtete Schloßabdeckung bildet, und daß am Schieber-Deckel eine Abdeckung zum Abdecken des Schließzylinders drehbar gelagert ist.

Durch die Verwendung eines Zylinderschlosses im Schieber-Deckel wird die Zugriffsberechtigung wesentlich erhöht, da dazu ein entsprechender Sicherheitsschlüssel erforderlich ist. Teil-Deckel und Schieber-Deckel bilden in der Schließstellung eine geschlossene Abdeckung, die im Bereich der Stoßstelle beider durch Überlappen eine Abdichtung bringen und die Abdeckung am Schieber-Deckel schützt den Zugang zum Schließzylinder. Damit wird ein staub- und wasserdichter Schutz für den Verschluß erhalten.

Nach einer Ausgestaltung ist vorteilhafterweise vorgesehen, daß der Teil-Deckel einstückig an der Schloßplatte angeformt ist.

Die Schließstellung des Schieber-Deckels wird dadurch aufrechterhalten, daß das Vorreiberschloß in einem Schloßkasten untergebracht ist, das in einen Durchbruch der Schloßplatte eingesetzt ist und an der der Tür abgekehrten Seite an der Schloßplatte vorsteht, und daß in der Schließstellung des Schieber-Deckels das Schließelement des Zylinderschlosses an der oberen Seite des Schloßkastens verriegelt.

Für den Einbau des Schließzylinders in den Schieber-Deckel ist vorgesehen, daß der Schließzylinder mittels einer Wand im Schieber-Deckel unverdrehbar gehalten ist.

Ein stoßfreier Übergang zwischen Teil-Deckel und Schieber-Deckel läßt sich dadurch erreichen, daß an der Stoßstelle zwischen Schieber-Deckel und Teil-Deckel Stege angeformt sind, die sich überdecken.

Für die Verstellung des Schieber-Deckels an der Schloßplatte ist nach einer Ausgestaltung vorgesehen, daß die Schloßplatte seitlich eingeformte Nuten trägt, in denen Führungsstege des Schieber-Deckels eingreifen.

Ist die Auslegung so, daß auf einer Seite der Schloßplatte in die Nut ein Anschlagstift eingesetzt ist, der in einer Aussparung des zugeordneten Führungssteges geführt ist und den Schieber-Deckel an der Schloßplatte festhält, jedoch den Verstellweg zwischen Öffnungs- und Schließstellung zuläßt, dann ist der Schieber-Deckel so an der Schloßplatte gehalten, daß er nur zwischen der Öffnungs- und Schließstellung verstellbar ist.

Damit der Verschluß mit einer kleinen Bauhöhe hergestellt werden kann, ist vorgesehen, daß der Schließzylinder mit seiner Schloßachse parallel zur Tür und horizontal ausgerichtet im Schieber-Deckel untergebracht ist und über eine mittels der Abdeckung freigebbare Öffnung in einer Seitenwand des Schieber-Deckels zugänglich ist.

Die Erfindung wird anhand eines in den Zeichnungen dargestellten Ausführungsbeispiels näher erläutert. Es zeigen:
- Fig. 1: in Draufsicht einen Verschluß in der Öffnungsstellung des Schieber-Deckels,
- Fig. 2: einen Längsschnitt durch den Verschluß nach Fig. 1, wobei die Schnittebene senkrecht zur Schloßplatte verläuft,
- Fig. 3: in Draufsicht den Verschluß in Schließstellung des Schieber-Deckels und
- Fig. 4: einen der Fig. 2 entsprechenden Längsschnitt durch den Verschluß in der Stellung nach Fig. 3.

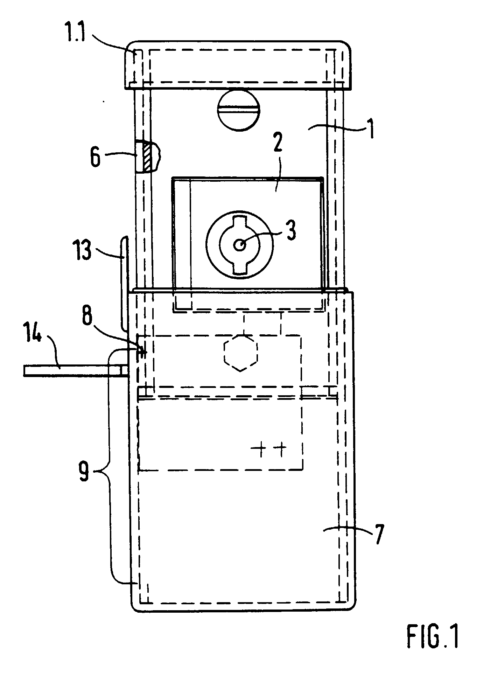

Der in den Fig. 1 bis 4 gezeigte Verschluß ist durch die Verwendung eines Schließzylinders als Sicherheitsschloß wesentlich geeigneter zur Erteilung von Zugriffsberechtigungen, da zu seiner Öffnung ein entsprechender Sicherheitsschlüssel erforderlich ist. Dabei ist die Verwendung von Profilhalbzylindern nach DIN 18254 möglich.

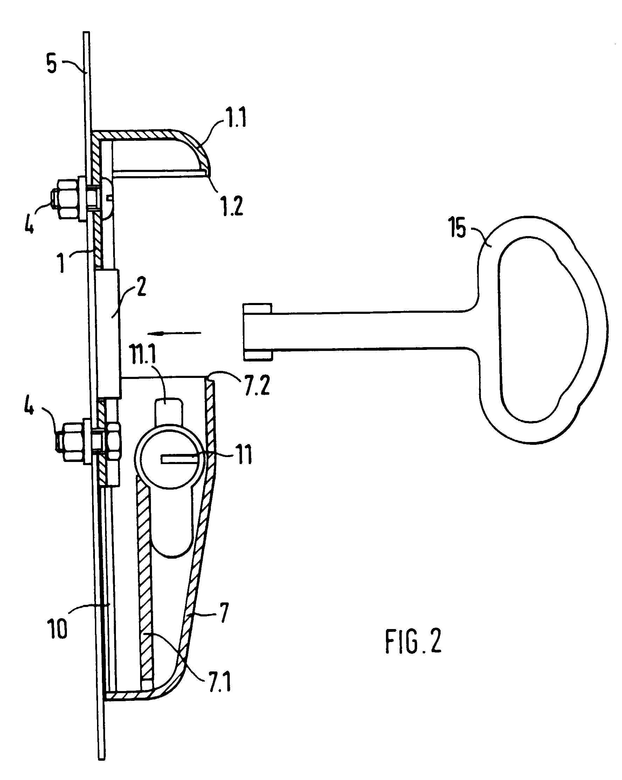

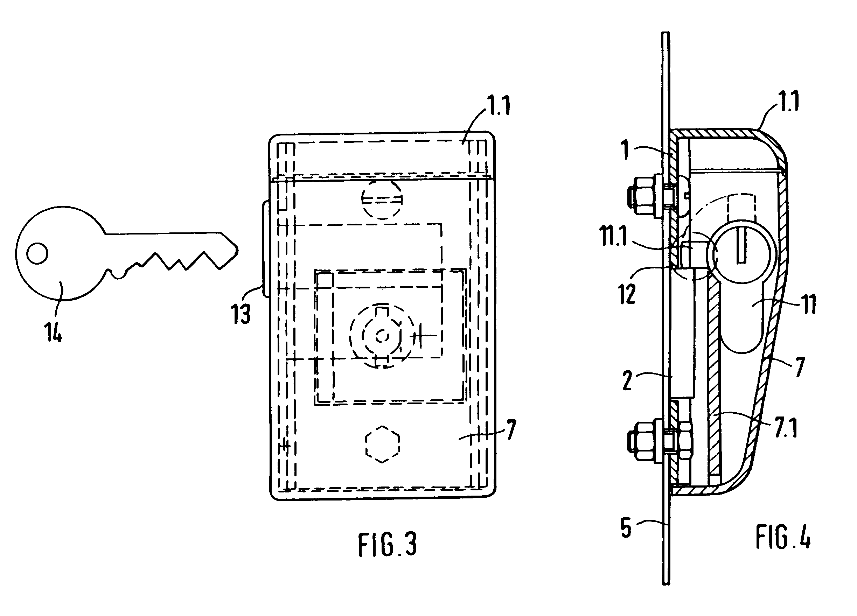

Wie insbesondere den Fig. 1 und 2 zu entnehmen ist, wird eine Schloßplatte 1 mit zwei Verschraubungen 4 mit der Tür 5 verbunden. Diese Schloßplatte 1 als Unterteil des Verschlusses trägt einen Teil-Deckel 1.1, der vorzugsweise einstückig an der Schloßplatte 1 angeformt ist. In einen Durchbruch 12 (Fig. 4) der Schloßplatte 1 ist ein den Vorreiberverschluß 3 aufnehmender Schloßkasten 2 eingesetzt, so daß dieser an der der Tür 5 abgekehrten Seite vorsteht.

An beiden vertikalen Seiten der Schloßplatte 1 sind Nuten 6 eingeformt, in die ein Schieber-Deckel 7 mit Führungsstegen 10 eingreift. Wie Fig. 1 erkennen läßt, ist auf einer Seite der Schloßplatte 1 in die Nut 6 ein Anschlagstift 8 eingesetzt.

Dieser Anschlagstift 8 ist in einer Aussparung 9 des Führungssteges 10 geführt, die eine Verstellung des Schieber-Deckels 7 von der Öffnungsstellung in die Schließstellung zuläßt. Der Anschlagstift 8 hält den Schieber-Deckel 7 unverlierbar an der Schloßplatte 1 fest. Diese Nut-Feder-Verbindung zwischen dem Schieber-Deckel 7 und der Schloßplatte 1 bildet eine Art Labyrinthdichtung und verhindert das Eindringen von Staub und Wasser. In den Schieber-Deckel 7 ist ein Schließzylinder 11 eingesetzt und zwar parallel zur Tür 5 und horizontal ausgerichtet, damit die Bauhöhe des Verschlusses klein gehalten werden kann. Dabei hält eine Wand 7.1 des Schieber-Deckels 7 den Schließzylinder 11 unverdrehbar fest. Die einander zugekehrten Stirnseiten von Teil-Deckel 1.1 und Schieber-Deckel 7 bilden eine Stoßstelle, die wie die angeformten Stege 1.2 und 7.2 zeigen, ebenfalls eine Dichtung bilden, wenn der Schieber-Deckel 7 in seine Schließstellung gebracht wird. Damit wird eine geschlossene Abdeckung des Verschlusses erreicht. Dabei wird der Zugang zum Schließzyliner 11 noch durch eine drehbar am Schieber-Deckel 7 gelagerte Abdeckung 13 abgedeckt und geschützt.

Das Vorreiberschloß 3 kann bei geöffnetem Schieber-Deckel 7 mittels eines Schlüssels 15 betätigt werden.

Wird, wie die Fig. 3 und 4 zeigen, der Schieber-Deckel 7 in seine Schließstellung gebracht, dann kann das Schließelement 11.1 des Schließzylinders 11 in die in Fig. 4 gezeigte Stellung verdreht werden und den Schloßkasten 2 so hintergreifen, daß der Schieber-Deckel 7 nicht mehr nach unten verstellt werden kann. Teil-Deckel 1.1 und Schieber-Deckel 7 überlappen sich im Bereich der Stege 1.2 und 7.2 und dichten die Stoßstelle ab. Der Verschluß kann nur von einem Berechtigten geöffnet werden, der im Besitz eines Sicherheitsschlüssels 14 ist. Erst, wenn das Schließelement 11.1 des Schließzylinders 11 wieder zurückgedreht ist, kann der Schieber-Deckel 7 in die Öffnungsstellung verschoben werden. Der Zugang zum Vorreiberschloß 3 ist dann frei.

Die unverlierbare Festlegung des Schieber-Deckels kann auch so erfolgen, daß von der Innenseite der Tür eine Schraube, insbesondere Befestigungsschraube 4 zur Befestigung der Schloßplatte 1 und/oder des Teil-Deckels 1.1 verwendet wird. Diese Befestigungsschraube 4 ragt dann in den Schieber-Deckel 7 und arbeitet so mit einem Anschlag desselben zusammen, daß der Schieber-Deckel 7 in der Öffnungsstellung unverlierbar am Verschluß gehalten ist.

## Patentansprüche

1. Verschluß für eine Tür, insbesondere Schaltschranktür, mit einer mit der Tür verbindbaren und ein Tür-Schloß (3) tragenden Schloßplatte (1) und mit einem an der Schloßplatte (1) verstellbar geführten Schieber-Deckel (7), der mittels eines Deckel-Schlosses (11) in einer das Tür-Schloß (3) überdeckenden Stellung abschließbar ist,
dadurch gekennzeichnet,
daß das Tür-Schloß als Vorreiberschloß (3) und das Deckel-Schloß als Schließzylinder (11) ausgebildet sind,
daß mit der Schloßplatte (1) ein Teil-Deckel (1.1) verbunden ist, der sich mit dem in Schließstellung befindlichen Schieber-Deckel (7) an der Stoßstelle überlappt und eine geschlossene abgedichtete Schloßabdeckung bildet, und
daß am Schieber-Deckel (7) eine Abdeckung (13) zum Abdecken des Schließzylinders (11) drehbar gelagert ist.

2. Verschluß nach Anspruch 1,
dadurch gekennzeichnet,
daß der Teil-Deckel (1.1) einstückig an der Schloßplatte (1) angeformt ist.

3. Verschluß nach Anspruch 1 oder 2,
dadurch gekennzeichnet,
daß das Vorreiberschloß (3) in einem Schloßkasten (2) untergebracht ist, das in einen Durchbruch (12) der Schloßplatte (1) eingesetzt ist und an der der Tür (5) abgekehrten Seite an der Schloßplatte (1) vorsteht, und
daß in der Schließstellung des Schieber-Deckels (7) das Schließelement (11.1) des Zylinderschlosses (11) an der oberen Seite des Schloßkastens (2) verriegelt.

4. Verschluß nach einem der Ansprüche 1 bis 3,
dadurch gekennzeichnet,
daß der Schließzylinder (11) mittels einer Wand (7.1) im Schieber-Deckel (7) unverdrehbar gehalten ist.

5. Verschluß nach einem der Ansprüche 1 bis 4,
dadurch gekennzeichnet,
daß an der Stoßstelle zwischen Schieber-Deckel (7) und Teil-Deckel (1.1) Stege (1.2; 7.2) angeformt sind, die sich überdecken.

6. Verschluß nach einem der Ansprüche 1 bis 5,
dadurch gekennzeichnet,
daß die Schloßplatte (1) seitlich eingeformte Nuten (6) trägt, in denen Führungsstege (10) des Schieber-Deckels (7) eingreifen.

7. Verschluß nach einem der Ansprüche 1 bis 6,
dadurch gekennzeichnet,
daß auf einer Seite der Schloßplatte (1) in die Nut (6) ein Anschlagstift (8) eingesetzt ist, der in einer Aussparung (9) des zugeordneten Führungssteges (10) geführt ist und den Schieber-Deckel (7) an der Schloßplatte (1) festhält, jedoch den Verstellweg zwischen Öffnungs- und Schließstellung zuläßt.

8. Verschluß nach einem der Ansprüche 1 bis 7,
dadurch gekennzeichnet,
daß der Schließzylinder (11) mit seiner Schloßachse parallel zur Tür (5) und horizontal ausgerichtet im Schieber-Deckel (7) untergebracht ist und über eine mittels der Abdeckung (13) freigebbare Öffnung in einer Seitenwand des Schieber-Deckels (7) zugänglich ist.

9. Verschluß nach einem der Ansprüche 1 bis 6,
dadurch gekennzeichnet,
daß von der Innenseite der Tür (5) eine Schraube, insbesondere eine Befestigungsschraube für die Schloßplatte (1) und/oder den Teil-Deckel (1.1) eingeschraubt ist, in den Schieber-Deckel (7) ragt und mit einem Anschlag desselben diesen in der Öffnungsstellung festhält.

## Claims

1. Closure for a door, more especially a switchgear cabinet door, including a lock plate (1), which is connectable to the door and carries a door lock (3), and including a slide cover (7), which is displaceably guided on the lock plate (1) and is lockable in a position covering the door lock (3) by means of a cover lock (11), characterised in that the door lock is configured as casement lock (rim lock) (3), and the cover lock is configured as cylinder lock (11), in that a partial cover (1.1) is connected to the lock plate (1), said partial cover being overlapped at the junction with the slide cover (7), when in the closed position, and forming a closed, sealed lock covering, and in that a covering (13) is rotatably mounted on the slide cover (7) in order to cover the cylinder lock (11).

2. Closure according to claim 1, characterised in that the partial cover (1.1) is integrally formed on the lock plate (1).

3. Closure according to claim 1 or 2, characterised in that the casement lock (3) is accommodated in a lock casing (2), which is inserted into an opening (12) in the lock plate (1) and protrudes beyond the lock plate (1) at the side remote from the door (5), and in that the closing element (11.1) of the cylinder lock (11) at the upper side of the lock casing (2) locks the slide cover (7) in the closed position.

4. Closure according to one of claims 1 to 3, characterised in that the cylinder lock (11) is non-rotatably retained in the slide cover (7) by means of a wall (7.1).

5. Closure according to one of claims 1 to 4, characterised in that ribs (1.2; 7.2), which cover each other, are shaped to fit at the junction between slide cover (7) and partial cover (1.1).

6. Closure according to one of claims 1 to 5, characterised in that the lock plate (1) carries laterally provided grooves (6), in which guide ribs (10) of the slide cover (7) engage.

7. Closure according to one of claims 1 to 6, characterised in that a stop pin (8) is inserted into the groove (6) on one side of the lock plate (1), said pin extending in a recess (9) in the associated guide rib (10) and securedly retaining the slide cover (7) on the lock plate (1), but said pin allows for the adjustment path between the open and closed positions.

8. Closure according to one of claims 1 to 7, characterised in that the cylinder lock (11) is accommodated in the slide cover (7) with its lock axis parallel to the door (5) and horizontally orientated and is accessible via an aperture, which is exposable by means of the covering (13), in a lateral wall of the slide cover (7).

9. Closure according to one of claims 1 to 6, characterised in that a screw, more especially a securing screw, for the lock plate (1) and/or the partial cover (1.1) is inserted from the inside of the door (5), protrudes into the slide cover (7) and securedly retains said slide cover in the open position by means of a stop thereon.

## Revendications

1. Système de fermeture pour porte, notamment pour porte d'armoire de distribution, avec un palastre pouvant être relié à la porte et portant une serrure (3) et avec un couvercle coulissant (7) guidé de manière réglable sur le palastre, couvercle (7) qui au moyen d'une serrure de couvercle (11) peut être placé dans une position de chevauchement de la serrure de porte (3),
caractérisé
en ce que la serrure de porte a la forme d'une serrure à tourniquet et en ce que la serrure de couvercle a la forme d'une serrure à cylindre (11),
en ce qu'au palastre (1) est relié un couvercle partiel (1.1) qui lorsque le couvercle coulissant (7) occupe la position de fermeture chevauche ledit couvercle à l'endroit de jonction et qui constitue un capot de serrure hermétiquement fermé, et
en ce que sur le couvercle coulissant (7) est monté à rotation un couvercle (13) pour le recouvrement du cylindre de fermeture (11).

2. Système de fermeture suivant la revendication 1,
caractérisé
en ce que le couvercle partiel (1.1) est formé sur le palastre (1) et en fait partie intégrante.

3. Système de fermeture suivant la revendication 1 ou la revendication 2,
caractérisé
en ce que la serrure à tourniquet (3) est logée dans un boîtier de serrure (2) qui est monté dans un percement (12) du palastre (1) et qui du côté non orienté vers la porte (5) fait protubérance sur le palastre (1), et
en ce que dans la position de fermeture du couvercle coulissant (7), l'élément de fermeture (11.1) de la serrure à cylindre (11) fait verrouillage sur le côté de haut du boîtier de serrure (2).

4. Système de fermeture suivant l'une quelconque des revendications de 1 à 3,
caractérisé
en ce que le cylindre de fermeture (11) est au moyen d'une paroi (7.1) monté à l'abri de la rotation dans le couvercle coulissant (7).

5. Système de fermeture suivant l'une quelconque des revendications de 1 à 4,
caractérisé
en ce que des nervures (1.2; 7.2) qui se chevauchent sont formées à l'endroit de jonction entre le couvercle coulissant (7) et le couvercle partiel (1.1).

6. Système de fermeture suivant l'une quelconque des revendications de 1 à 5,
caractérisé
en ce que
le palastre (1) présente des rainures (6) formées latéralement, rainures dans lesquelles s'engagent des nervures de guidage (10) du couvercle coulissant (7).

7. Système de fermeture suivant l'une quelconque des revendications de 1 à 6,
caractérisé
en ce que
d'un côté du palastre (1), une goupille de butée (8) est montée dans la rainure (6), goupille qui est guidée dans un évidement (9) de la nervure de guidage associée (10) et qui maintient le couvercle coulissant (7) sur le palastre (1), tout en autorisant le déplacement de ce couvercle entre la position d'ouverture et la position de fermeture.

8. Système de fermeture suivant l'une quelconque des revendications de 1 à 7,
caractérisé
en ce que
le cylindre de serrure (11) est logé dans le couvercle coulissant (7) dans une position où son axe est orienté parallèlement à la porte (5) et horizontalement et où il est accessible dans une paroi latérale du couvercle coulissant (7) au travers une ouverture qui est libérée par le déplacement du couvercle (13).

9. Système de fermeture suivant l'une quelconque des revendications de 1 à 6,
caractérisé
en ce que
depuis le côté intérieur de la porte (5) est vissée une vis, notamment une vis de fixation pour le palastre (1) et/ou pour le couvercle partiel (1.1), vis qui s'engage dans le couvercle coulissant (7) et qui maintient, au moyen d'une butée de ce couvercle coulissant, ce dernier dans la position d'ouverture.
